# EUROPEAN PATENT APPLICATION

(11) **EP 1 918 935 A2**
(43) Date of publication of application: **07.05.2008**
(21) Application number: 07118740.5
(22) Date of filing: 18.10.2007
(51) Int. Cl.: G11B 33/04

(54) **Clamshell box-like case for CDs and DVDs**

(30) Priority: 31.10.2006 IT PD20060404
(71) Applicant: Hot-Form-S.N.C. Di Mariotto Adriano E C., 35019 Tombolo, Frazione Onara (PD) (IT)
(72) Inventor: Mariotto, Adriano, TOMBOLO PD 35019 (IT)
(74) Representative: Modiano, Micaela Nadia

(57) **Abstract**

A clamshell box-like case for CDs and DVDs, constituted by a first part (11), which is provided with at least one compartment (12) for a CD/DVD, and a second part (13), which is designed to close the first part and is monolithic therewith by interposition of a connection and articulation flap or spine (14). At least one of the parts (11, 13) has, in non-perimetric regions, one or more weight reduction openings (15, 16a, 16b).

## Description

The present invention relates to a clamshell box-like case for CDs and DVDs.

Clamshell box-like cases, generally constituted by a first part, which is provided with at least one compartment for containing a CD/DVD, and a second part, which is designed to close said first part, said two parts being monolithic by interposition of a connection and articulation flap or spine, are currently widespread and widely used to contain and store a DVD or CD.

Although these box-like cases are appreciated and used in particular mostly to provide medium/high-value CD/DVD packages, they require a certain quantity of plastics for their manufacture.

Moreover, each case has its own weight which, despite being low, when added to the weight of hundreds or thousands of identical cases, causes physical effort and transport costs for all CD/DVD retailers, such as for example megastores and supermarkets, and for newsagents and small-scale dealers in general, which are invaded increasingly by packages with CDs/DVDs, each enclosed in its own protective case, to be managed in terms of both transport and storage.

The aim of the present invention is to provide a clamshell box-like case for CDs and DVDs which is cheaper to manufacture than known types of box-like case.

Within this aim, an object of the present invention is to provide a case which can be made of plastics by using less material.

Another object of the present invention is to provide a case which is lighter and easier to handle than known types of case.

Another object of the present invention is to provide a case which is at least as tough and capable of protecting the contained disk as known types of case.

Another object of the present invention is to provide a clamshell box-like case for CDs and DVDs which can be manufactured with known systems and technologies.

This aim and these and other objects, which will become better apparent hereinafter, are achieved by a clamshell box-like case for CDs and DVDs, constituted by a first part, which is provided with at least one compartment for containing a CD/DVD, and a second part, which is designed to close said first part and is monolithic therewith by interposition of a connection and articulation flap or spine, the case being characterized in that at least one of said parts has, in non-perimetric regions, one or more weight reduction openings.

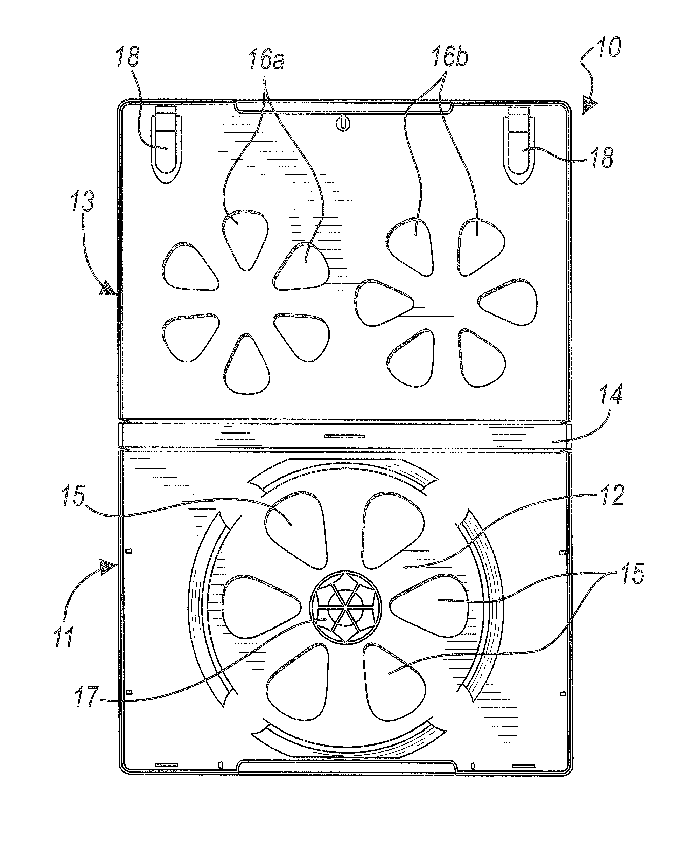

Further characteristics and advantages of the invention will become better apparent from the following detailed description of a preferred but not exclusive embodiment thereof, illustrated by way of non-limiting example in the accompanying drawing, wherein the sole figure is a view of a case according to the invention in the open condition.

With reference to the figure, a box-like case according to the invention is generally designated by the reference numeral 10.

The case 10 is constituted by a first part 11, in which there is a containment compartment 12 for a CD/DVD, and by a second part 13, which is designed to close the first part 11.

The second part 13 is formed monolithically with the first part 11, by interposing an articulation and connection flap or spine 14.

The case 10 according to the invention is characterized in that at least one of the parts that compose it, 11 and/or 13, has, in non-perimetric regions, one or more weight reduction openings, designated hereinafter by the reference numerals 15, 16a, and 16b.

The embodiment described here by way of non-limiting example of the invention has a first series of openings 15 at the containment compartment 12 of the first part 11, the openings 15 being arranged symmetrically with respect to a reference axis of the arrangement of the first part 11.

The first openings 15 are arranged substantially in a circle.

The case 10 according to the invention also has a second series of openings 16a and 16b on the second part 13.

The second openings 16a and 16b are arranged along two laterally adjacent circular lines.

In the present exemplary embodiment, the first opening 15 and the second openings 16a and 16b have a teardrop-shaped profile and are arranged so that the pointed end is directed toward the center of the corresponding circular line on which they lie.

This shape and arrangement of the openings allow to obtain on the first part 11, as well as on the second part 13, profiles which simulate the contour of a movie reel, i.e., of a film holder reel for a movie to be projected with a movie projector.

The openings 15, 16a and 16b are to be understood as being producible in any shape and size.

In the center of the compartment for containing a CD/DVD there is a mushroom-shaped device 17 for the reversible snap locking of the CD/DVD.

Moreover, on the second part 13 there are two cantilever tabs 18 for retaining the booklet which is normally provided inside CD/DVD cases and is sold together with the purchased CD/DVD.

The case 10 is provided externally with a transparent sleeve, not shown for the sake of simplicity, which forms a pocket for a cover which is associated with the CD/DVD arranged in the case.

The case 10 can be manufactured cheaply by molding plastic material and the weight reduction openings can be provided by performing simple modifications to the molds that are already in use.

Such weight reduction openings, such as the openings 15, 16a and 16b shown here by way of example, allow to achieve a reduction in the weight of the finished case (including the transparent sleeve) of more than 10%.

This produces a saving during production but also a reduction in the effort and costs for all CD/DVD retailers, such as for example megastores, but also newsagents, who have to handle the transport, storage and placement in their display areas of enormous quantities of such cases with CDs/DVDs inside them.

In such situations, even a weight reduction of 10-15 g per case can lead to a significant reduction in the weight of the pallet or package in general which carries hundreds of such cases.

In practice it has been found that the invention thus described achieves the intended aim and objects.

In particular, the present invention has provided a clamshell box-like case for CDs and DVDs which is cheaper to manufacture than known types of box-like cases by virtue of the important reduction in the amount of plastic material to be used.

Moreover, the present invention provides a case which is lighter and easier to handle than known types of case.

Further, the present invention provides a case whose toughness and ability to protect the disc contained therein are at least equal to those of known types of case.

Moreover, the present invention provides a clamshell box-like case for CDs and DVDs which can be manufactured with known systems and technologies.

In practice, the materials employed, so long as they are compatible with the specific use, as well as the dimensions, may be any according to requirements and to the state of the art.

The disclosures in Italian Patent Application No. PD2006A000404 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A clamshell box-like case for CDs and DVDs, constituted by a first part (11), which is provided with at least one compartment (12) for containing a CD/DVD, and a second part (13), which is designed to close said first part and is monolithic therewith by interposition of a connection and articulation flap or spine (14), said case being **characterized in that** at least one of said parts (11, 13) has, in non-perimetric regions, one or more weight reduction openings (15, 16a, 16b).

2. The case according to claim 1, **characterized in that** it has a series of openings (15) at said compartment (12) for containing the first part (11), said openings (15) being arranged symmetrically with respect to a reference axis of the arrangement of said first part (11).

3. The case according to claim 2, **characterized in that** said openings (15) are arranged substantially in a circle.

4. The case according to one or more of the preceding claims, **characterized in that** it has a series of openings (16a, 16b) on said second part (13).

5. The case according to claim 4, **characterized in that** said openings (16a, 16b) on said second part (13) are arranged along two laterally adjacent circular lines.

6. The case according to one or more of the preceding claims, **characterized in that** said openings (15, 16a, 16b) have a teardrop-shaped profile and are arranged with the pointed end toward the center of the corresponding circular line on which they lie.

7. The case according to one or more of the preceding claims, **characterized in that** a mushroom-shaped device (17) for the reversible snap-acting locking of the CD/DVD is provided in the center of the containment compartment for a CD/DVD.

8. The case according to one or more of the preceding claims, **characterized in that** it is provided by molding plastics.

9. The case according to one or more of the preceding claims, **characterized in that** it is provided externally with a transparent sleeve which forms a pocket for a cover which is associated with the CD/DVD arranged in the case.
